# EUROPÄISCHE PATENTSCHRIFT

(11) **EP 1 523 240 B1**
(45) Veröffentlichungstag und Bekanntmachung des Hinweises auf die Patenterteilung: **09.05.2007**
(21) Anmeldenummer: 03763833.5
(22) Anmeldetag: 14.07.2003
(51) Int. Cl.: A22C 13/00

(54) **FULLFERTIG VORBEFEUCHTETE, ANTIMIKROBIELL AUSGERUSTETE NAHRUNGSMITTELHULLE AUF POLYMERBASIS**
READY-TO-FILL PRE-MOISTENED ANTIMICROBIAL POLYMER-BASED FOOD CASING
ENVELOPPE A BASE POLYMERE POUR PRODUIT ALIMENTAIRE A PROTECTION ANTIMICROBIENNE ET PREHUMIDIFIEE DE FACON A ETRE PRETE A REMPLIR

(30) Priorität: 15.07.2002 DE 10231811
(43) Veröffentlichungstag der Anmeldung: 20.04.2005
(73) Patentinhaber: Kalle GmbH, 65203 Wiesbaden (DE)
(72) Erfinder: HAMMER, Klaus-Dieter, 55120 Mainz (DE); KÖNIG, Martina, 65207 Wiesbaden (DE); GROLIG, Gerhard, 64546 Mörfelden-Walldorf (DE)
(74) Vertreter: Plate, Jürgen
(86) Internationale Anmeldenummer: PCT/EP2003/007586
(87) Internationale Veröffentlichungsnummer: WO 2004/006684

(56) Entgegenhaltungen:
- EP-A- 0 190 630
- EP-A- 0 502 431
- EP-A- 1 013 173
- WO-A-98/14073
- DE-A- 3 240 847
- DE-A- 19 625 094
- GB-A- 2 117 216
- US-A- 3 617 312
- US-A- 3 864 499

## Beschreibung

Die Erfindung betrifft eine füllfertig vorbefeuchtete, antimikrobiell ausgerüstete, schlauchförmige, ein- oder mehrschichtige Nahrungsmittelhülle auf Polymerbasis. Sie betrifft ferner die Verwendung dieser Hülle als künstliche Wursthülle.

Bekannt sind ein- und mehrschichtige Nahrungsmittelhüllen aus den verschiedensten Materialien. Weit verbreitet sind Hüllen auf der Basis von Kollagen, von (regenerierter) Cellulose, von Polyamid, Polyolefin oder anderen (synthetischen) Polymeren sowie Gemischen daraus. Künstliche Wursthüllen werden allgemein unmittelbar vor dem Füllen gewässert, um sie geschmeidiger und dehnbarer zu machen. Das Wässern ist nicht nur sehr aufwendig, sondern auch hygienisch außerordentlich bedenklich, denn durch das Wässerungsbad ist eine Kontamination mit den verschiedensten Keimen möglich. Darüber hinaus ist bei der üblichen Wässerungszeit von etwa 15 bis 30 min eine gleichmäßige Diffusion des Wassers über den gesamten Querschnitt der Hülle nicht zu erreichen.

Alternativ dazu werden füllfertig vorbefeuchtete Hüllen angeboten. Das sind häufig Cellulosehydrathüllen mit einem Feuchtigkeitsanteil von etwa 20 bis 35 Gew.-%. Um ein Austrocknen bei Lagerung und Transport zu verhindern, werden die Hüllen mit einer wasserdampfdichten Verpackung versehen. Wenn bei der Herstellung und Verpackung keine absolut sterilen Bedingungen eingehalten wurden, können die vorbefeuchteten Hüllen mit Bakterien, Pilzen, Hefen oder anderen Mikroorganismen kontaminiert sein, die dann später ideale Wachstumsbedingungen vorfinden, besonders wenn die Hüllen bei höheren Umgebungstemperaturen gelagert werden. Das Resultat sind dann beispielsweise unerwünschte Schimmelflecken. Schimmelpilze bilden zudem cellulytische Enzyme, die die Cellulosehüllen selbst angreifen und letztendlich zerstören können. Es wurde daher nach Wegen gesucht um die unerwünschte Ausbreitung von Mikroorganismen auf den vorbefeuchteten Hüllen zu verhindern.

Eine solche Methode ist in der US-A 4 867 204 (= DE-A 27 21 427) offenbart. Gemäß dieser Methode wird das Wachstum der Mikroorganismen durch ein wasserlösliches antimykotisches Mittel verhindert. Das antimykotische Mittel ist vorzugsweise Propylenglykol, Kalium-, Natrium- oder Calciumpropionat, Kalium-, Natrium- oder Calciumsorbat, Propionsäure oder ein niederer Alkylester der *para*-Hydroxy-benzoesäure.

Aus der DE-A 195 40 082 sind konditionierte, d.h. füllfertig vorbefeuchtete schlauchförmige Nahrungsmittelhüllen auf Basis von Kunststoffen, wie Polyamiden, Polyestern oder Mischungen daraus, bekannt. Diese sogenannten Polymerhüllen sind vorzugsweise zu Raupen gerafft und von einer wasserdampfundurchlässigen Umverpackung umgeben. Um eine Verkeimung mit Mikroorganismen während der Lagerung zu verhindern, kann das zum Konditionieren der Hülle verwendete Wasserbad ein Konservierungsmittel enthalten. Das ist bevorzugt eine Mineralsäure, wie Salzsäure oder Phosphorsäure, oder eine organische Säure, wie Ameisensäure, Essigsäure, Propionsäure, Weinsäure, Bernsteinsäure, Äpfelsäure, Citronensäure oder Ascorbinsäure. Der Anteil an Säure in dem Bad beträgt allgemein 0,1 bis 10 Gew.-%, der pH-Wert des Bades dementsprechend etwa 0 bis 5. Die Hülle befindet sich mindestens 15 Minuten in diesem Bad. Vor der Konditionierung mit der wäßrigen sauren Phase kann die Hülle noch mit einer Ölemulsion behandelt werden. Die genannten Konservierungsmittel haben in akzeptabler Konzentration keinen zuverlässigen Effekt. Das wird darauf zurückgeführt, daß die genannten Säuren mit dem Polyamid des Hüllenmaterials langsam reagieren, wodurch sich der pH-Wert erhöht und die Wirkung der Konservierungsmittel nachläßt. Bei höherer Dosierung wiederum beeinflussen die Säuren das Brät negativ (Geschmack, Koagulation).

In DE-A 198 60 142 und DE-A-196 25 094 sind füllfertig konditionierte, mehrschichtige, biaxial verstreckte Schlauchfollen auf Polyamidbasis offenbart Konditioniert werden die Schlauchfolien durch Besprühen mit Wasser, dem gegebenenfalls ein abliches Fungizid, beispielsweise eine quaternäre Ammoniumverbindung, und/oder ein übliches Konservierungsmittel zugesetzt sein kann. Besprüht werden vorzugsweise beide Seiten der Schlauchfolien.

In der EP-A 190 630 ist eine gegebenenfalls faserverstärkte Nahrungsmittelhülle auf Basis von regenerierter Cellulose, von Celluloseethern oder anderen hydrophilen Polymeren offenbart, die mit mindestens 40 Gew.-% Wasser füllfertig vorbefeuchtet ist. Um die Hülle vor dem Befall mit Bakterien, Schimmelpilzen oder anderen Mikroorganismen zu schützen, ist sie mit einem antimykotisch wirksamen Mittel behandelt. Das Mittel ist bevorzugt ein *para-*Hydroxy-benzoesäurealkylester.

Eine Hülle aus filmbildenden, hydrophilen Polymeren, insbesondere aus regenerierter Cellulose, ist auch in der US-A 3 864 499 beschrieben. Dispergiert in den Polymeren sind öl-lösliche Additive, insbesondere Anti-Oxidantien, Biocide, Farbstoffe, UV-Absorber, Geschmacks- oder Geruchsstoffe. Daneben ist eine Cellulose-Wursthülle offenbart, die ein lebensmittelrechtlich zugelassenes Antimykotikum enthält. Das Antimykotikum ist bevorzugt *para*-Hydroxy-benzoesäuremethylester, -ethylester oder -propylester.

In der DE 196 25 094 ist eine Raffraupe aus einer ein- oder mehrschichtigen, biaxial verstreckten und thermofixierten, schlauchförmigen Nahrungsmittelhülle auf Basis von Polyamid offenbart. Vor dem Raffen wird die Hülle eingesprüht mit einer Lösung, die einen Emulgator, vorzugsweise auch ein - nicht näher charakterisiertes - Bakterizid und ein Gleitmittel enthält.

Aus diesen Mängeln ergab sich die technische Aufgabe, füllfertig vorbefeuchtete schlauchförmige Kunststoffhüllen zur Verfügung zu stellen, die zuverlässig und dauerhaft konserviert sind, ohne daß das zur Konservierung verwendete Mittel das Hüllenmaterial angreift oder das später eingefüllte Nahrungsmittel negativ beeinflußt. Das Mittel soll zudem ein breites Wirkungsspektrum haben, d.h. möglichst gegen alle Arten von Mikroorganismen wirksam sein, und es soll unabhängig vom pH-Wert wirken. Das Konservierungsmittel soll sich zudem möglichst ohne einen zusätzlichen Verfahrensschritt auf die innen- und/oder Außenseite der Hülle aufbringen lassen. Vorzugsweise soll es sich kombinieren lassen mit Mitteln, die die Schälbarkeit verbessern und mit diesen zusammen aufgetragen werden können.

Gelöst wird die Aufgabe durch den Einsatz von *para*-Hydroxy-benzoesäurealkylestem und/oder deren Salzen. Dabei wurde gefunden, daß die antimikrobielle Wirksamkeit mit der Kettenlänge im Alkylteil ansteigt. *para*-Hydroxybenzoesäurebutylester sind also wirksamer als der entsprechende Ethylester und dieser wiederum ist wirksamer als der Methylester.

Gegenstand der Erfindung ist demgemäß eine füllfertig vorbefeuchtete, antimikrobiell ausgerüstete, schlauchförmige, ein- oder mehrschichtige Nahrungsmittelhalle auf Polymerbasis, die dadurch gekennzeichnet ist daß sie als antimikrobiell wirksamen Bestandteil einen *para*-Hydroxy-benzoesäure-alkylester und/oder ein Salz davon enthält.

Der *para*-Hydroxy-benzoesäurealkylester bzw. dessen Salz (beide nachfolgend auch als PHB-Ester abgekürzt) enthält zweckmäßig 1 bis 10. bevorzugt 1 bis 6, besonders bevorzugt 2 bis 5 Kohlenstoffatome im Alkylteil, wobei der Alkylteil allgemein nicht verzweigt ist. Das genannte Salz ist bevorzugt ein Kalium- oder Natriumsalz. Anders als die meisten Konservierungsmittel sind die PHB-Ester praktisch unabhängig vom pH-Wert antimikrobiell wirksam, d.h. sie wirken im saurem wie auch in alkalischem Milieu gegen Pilze. Hefen und Bakterien (E. coli, Salmonellen, Staphylokokken u.a.). Die antimikrobleilen Eigenschaften werden auf eine Wechselwirkung mit der Zellmembran und den Proteinen in der Zelle der Mikroorganismen zurückgeführt. Dabei werden die Lipoid-Membranen durchdrungen und geschädigt.

Der PHB-Ester ist gegebenenfalls kombiniert mit anderen antimikrobiell wirksamen Mitteln. Das sind insbesondere organische Säuren, wie Ameisensäure, Propionsäure oder Sorbinsäure sowie deren Salze, wie Natrium- oder Kaliumsorbat Da die Sorbate keine fungicide Wirkung haben, sondern nur die undissozlierte Sorbinsäure selbst, ist der pH-Wert der Lösung durch Zusatz von Milchsäure, die selbst biocide Eigenschaften hat, oder andere milde organische Säuren so weit abzusenken, daß ausreichend Sorbinsäure vorliegt. Der pH-Wert sollte dazu auf weniger als 6 eingestellt werden. Dabei muß allerdings das Ausfallen von Sorbinsäure verhindert werden. Antimikrobiell wirksam sind daneben Substanzen, die die Wasseraktivität vermindern, d.h. den a_{w}-Wert senken. Das sind insbesondere mehrwertige aliphatische Alkohole, wie Glycerin oder Propandiol. Der Begriff "antimikrobiell" steht In der vorliegenden Anmeldung für baktericid, bakteriostatisch, furigicid und/oder fungistatisch. Als zusätzliche baktericide Substanz bietet sich insbesondere das 1,2-Benzoisothiazolin-3-on an.

In der zum Vorbefeuchten verwendeten Lösung beträgt der Anteil aller antimikrobiellen Mittel zusammen allgemein etwa 0,1 und 8 Gew.-%, bevorzugt 0,2 bis 2 Gew.-%.

Der PHB-Ester wird zweckmäßig in einem Schritt mit dem zur Vorbefeuchtung dienenden Wasser auf die Innen- und/oder Außenseite der Schlauchfolle aufgebracht. In einer besonders einfachen Ausführungsform wird eine wäßrige Lösung aufgesprüht, die den oder die Konservierungsstoff(e) und gegebenenfalls weitere Bestandteile enthält Eine Außenpraparation ist auch durch Hindurchleiten der (flachgelegten) Hülle durch eine Tränkwanne oder durch Außenbesprühen vor dem Konfektionieren möglich. Die Innenpräparation erfolgt allgemein mit Hilfe eines Sprühdorns beim Raffen der Hülle, Das Aufbringen der Vorbefeuchtungslöwng auf die Innen- und die Außenseite ist besonders bei solchen mehrschichtigen Hüllen sinnvoll, die im Inneren wasserdampfsperrende Schichten aufweisen.

Die zur Vorwässerung für füllfertige Raupen eingesetzte wäßrige Zusammensetzung kann darüber hinaus Komponenten enthalten, die die Hülle leicht schälbar machen (Easy-peel-Praparation). Aber nicht für jede Anwendung ist eine leichte Schälbarkeit gewünscht. Häufig wird sogar eine stärkere Bräthaftung gefordert, um Geleeabsatz zu verhindern.

Gemäß der vorliegenden Erfindung werden vor allem Nahrungsmittethollen auf Basis von Polyamid füllfertig vorbefeuchtet sowie solche, die Polyamid in wenigstens einer Schicht enthalten. Das Polyamid ist in der Regel aliphatisches und/oder teilaromatisches Polyamid. Das aliphatische Polyamid ist bevorzugt ein lineares aliphatisches Polyamid, wie PA 6, PA 11 oder PA 12 oder ein lineares aliphatisches Copolyamid, wie PA 6,66, PA 6.9, PA 6.10, PA 6.11 oder PA 6.12. Mischungen von Polyamiden und Copolyamiden sind ebenfalls verwendbar. Die mehrschichtigen Hüllen enthalten allgemein neben mindestens einer PA-Schicht, die die äußere und/oder innere Oberfläche der Hülle bildet, noch mindestens eine wasserdampfsperrende Schicht. Diese besteht vorzugsweise aus Polyolefin(en), wie Polyethylen, Polypropylen, Polybutylen sowie die Copolymere aus Ethylen und/oder Proplyen und α-Olefinen mit 4 bis 8 Kohlenstoffatomen. Die Polyolefine können endgruppenmodifiziert sein um die Haftung an angrenzende Schichten, insbesondere an Polyamidschichten, zu verbessern, Weitere Schichten können vorhanden sein, insbesondere Haftschichten zwischen PA- und Polyolefin(PO)-Schichten.

Polyamidhüllen bzw. Polyamidschichten nehmen im Querschnittinneren bis zu etwa 6 Gew.-% Wasser auf, d. h. das Wasser ist ein Quellmittel für Polyamide. Da die Diffusion zeitabhängig ist, wird die Vorwässerungslösung Im Überschuß auf die Oberfläche aufgebracht. Die Auftragsmenge an wäßriger Lösung sollte zwischen 10 und 150 Gew.-%, vorzugsweise 20 bis 100 Gew.-%, betragen, jeweils bezogen auf das Schlauchgewicht. Um eine gleichmäßige Präparation zu gewährleisten, ist ein zu rasches Ablaufen der Lösung zu verhindern, d. h. es ist durch die Zusammensetzung dafür zu sorgen, daß die zum Vorbefeuchten verwendete Flüssigkeit auf der Oberfläche "festgehalten" wird. Das läßt sich beispielsweise durch Erhöhung der Viskosität oder durch Zusatz einer Ölemulsion erreichen. Zur Viskositätserhöhung kommen vor allem mehrwertige Alkohole, wie Glycerin oder Sorbit, daneben auch Polyacrylsäuren oder andere Verdickungsmittel In Frage; als Öle sind vor allem natürliche fette Öle, wie Olivenöl, Rapsöl oder Sonnenblumenöl, aber auch synthetische Triglyceride (erhältlich beispielsweise unter der Bezeichnung ®Softenol) geeignet. Sie können der Präparationslösung in einer Konzentration von 1 bis 40 %, vorzugsweise 2 bis 15 % zugesetzt sein. Die Viskosität wird zweckmäßg so eingestellt, daß die Lösung problemlos aufgesprüht werden kann.

Die Vorwässerung Innen läßt sich mit einer Easy-peel-Präparation zur Verbesserung der Schälbarkeit kombinieren, indem die Präparationsiösung, die schon eine Ölemulsion enthält, mit den bekannten Easy-peel-Wirkkotnponenten versetzt wird. Dafür bieten sich vor allem Cellulose und Stärkederivate. Alginate und Chitosan an. Sie werden in einer Konzentration von 0,1 bis 8 %, vorzugsweise 0.5 bis 2.5 %, eingesetzt Bei höheren Konzentrationen sind entsprechend niedrigviskose Typen, z. B. Carboxymethyl-methyl-, Hydroxyethyl-, Methylhydroxyethyl-Cellutose-10. -20 oder -30 anzuwenden.

Die innen und/oder außen mit der Befeuchtungslösung präparierten Hüllen werden vor der weiteren Verarbeitung zweckmäßig 1 bis 2 Wochen lang gelagert, um eine gleichmäßige Diffusion in den Querschnitt der Hüllen und somit eine störungsfreie Verarbeitung zu gewährleisten.

Die Vorwässerung von Hüllen auf Polymerbasis war vor allem innen bisher für nicht möglich gehalten worden. Mit diesem einfachen Verfahrensschritt vor der Konfektionierung gelingt das nun ohne zusätzlichen Aufwand. Durch diesen einen Schritt, d.h. durch das Aufbringen der Präparationslösung, wird die Hülle gleichzeitig vorgewässert und konserviert, gegebenenfalls auch leicht schälbar eingestellt.

Diese Präparation ist unter hygienischen Bedingungen möglich, was bei längerem Wässern der Raupen oder Abschnitte in den Verarbeitungsbetrieben keineswegs garantiert ist.

Die nachfolgenden Beispiele dienen zur Illustration der Erfindung. Prozente sind darin Gewichtsprozente, soweit nicht anders angegeben oder aus dem Zusammenhang ersichtlich.

### Beispiel 1

Ein biaxial verstreckter, dreischichtiger Schlauch mit einem Polyamid/Polyethylen/Polyamid-Aufbau und einem Durchmesser von 90 mm (= Kaliber 90) wurde beim Raffen mit einer Lösung folgender Zusammensetzung innen und außen besprüht:

| | |
|---|---|
| 94,50 l | Wasser |
| 2,00 kg | *para*-Hydroxy-benzoesäuremethylester, Na-Salz |
| 3,50 kg | Glycerin |

Die Sprühmenge wurde so eingestellt, daß die Gewichtszunahme des Schlauches ca. 35 % betrug.

Nach zweiwöchiger Lagerung der Raupen war ausreichend Wasser in die PA-Schichten diffundiert, so daß ein problemloses und faltenfreies Füllen möglich war. Die Raupen waren ohne Schimmel- oder Bakterienbefall beliebig lange lagerfähig.

### Beispiel 2

Ein einschichtiger, verstreckter PA-Schlauch vom Kaliber 60 wurde beim Raffen mit folgender Lösung innen und außen besprüht:

| | |
|---|---|
| 91,50 l | Wasser |
| 2,00 kg | Propan-1,2-diol |
| 0,50 kg | *para*-Hydroxy-benzoesäurepropylester, Na-Salz |

Die Sprühmenge wurde so eingestellt, daß die Gewichtszunahme des Schlauches ca. 40 % betrug. Die so hergestellten Raupen waren ohne zusätzliches Wässern faltenfrei füllbar, Schimmel- oder Bakterienbefall wurde auch nach längerer Lagerdauer (mehrere Monate) nicht beobachtet.

### Beispiel 3

Ein unverstreckter Polyamidschlauch (UPA) vom Kaliber 105 wurde für die wässerungsfreie Verarbeitung beim Raffen innen und außen mit folgender Lösung besprüht:

| | |
|---|---|
| 88,00 l | Wasser, |
| 1,0 kg | *para*-Hydroxy-benzoesäuremethylester, |
| 1,0 kg | *para*-Hydroxy-benzoesäurepropylester, Na-Salz und |
| 10,0 kg | Triglycerid (®Softenol)-Emulsion (50 %ig in Wasser). |

Die Sprühmenge war so eingestellt, daß die Gewichtszunahme des Schlauches ca. 32 % betrug (gleiche Menge innen und außen).

Die Raupen waren praktisch unbegrenzt lagerfähig. Sie ließen sich ohne weiteres Wässern faltenfrei füllen.

### Beispiel 4

Eine biaxial verstreckte, dreischichtige, schlauchförmige Hülle mit einem Polyamid/Polyethylen/Polyamid-Aufbau (®Nalobar der Kalle GmbH & Co. KG) vom Kaliber 60 wurde auf der Außenseite mit einer Lösung gemäß Beispiel 2 und auf der Innenseite mit folgender Lösung besprüht

| | |
|---|---|
| 97,30 l | Wasser, |
| 2,0 kg | Carboxymethylcellulose (®Tylose C30 der Clariant Deutschland GmbH), |
| 2,0 kg | einer 50 %igen wäßrigen Triglycerid-Emulsion (®Softenol), |
| 2,0 kg | *para*-Hydroxy-benzoesäuremethylester, Na-Salz und |
| 0,4 kg | Lecithin. |

Die Sprühmenge wurde so eingestellt, daß die Gewichtszunahme des Schlauches ca. 42 % betrug. Die aus dem Schlauch hergestellten Raupen wurden dann mit einer wasserciampfdichten Folie umgeben und mehrere Monate lang gelagert. Nach der Lagerung war kein Schimmel- oder Bakterienbefall nachweisbar. Von den damit hergestellten Würsten ließ sich die Hülle leicht abschälen.

### Beispiel 5

Ein biaxial verstreckter, dreischichtiger Schlauch mit einem Polyamid/Polyethylen/Polyamid-Aufbau (®Nalobar) vom Kaliber 60 wurde durch eine Tränkwanne geführt, in der sich eine Lösung gemäß Beispiel 2 befand. Beim Raffen wurde der Schlauch dann auf der Außenseite mit Paraffinöl und auf der Innenseite mit folgender Lösung

| | |
|---|---|
| 97,30 l | Wasser, |
| 2,0 kg | Carboxymethylcellulose (®Tylose C30 der Clariant Deutschland GmbH), |
| 2,0 kg | einer 50 %igen wäßrigen Triglycerid-Emulsion (®Softenol), |
| 2,0 kg | *para*-Hydroxy-benzoesäurepropylester, Na-Salz und |
| 0,4 kg | eines Diketens mit geradkettigen (C₁₄-C₂₀)Alkylresten (®Aquapel) |

besprüht.

Die Sprühmenge wurde so eingestellt, daß die Gewichtszunahme des Schlauches ca. 36 % betrug. Die aus dem Schlauch hergestellten Raupen wurden dann mit einer wasserdampfdichten Folie umgeben und mehrere Monate lang gelagert. Nach der Lagerung war kein Schimmel- oder Bakterieribefall nachweisbar. Von den damit hergestellten Würsten ließ sich die Hülle leicht und ohne anhaftende Brätreste abschälen.

## Patentansprüche

1. Füllfertig vorbefeuchtete, antimikrobiell ausgerüstete, schlauchförmige, ein- oder mehrschichtige Kunststoff-Nahrungsmittelhülle auf Polymerbasis, **dadurch gekennzeichnet, daß** auf der Innen- und/oder Außenseite der Hülle als antimikrobiell wirksamer Bestandteil ein *para-*Hydroxy-benzoesäure-alkylester und/oder ein Salz davon aufgebracht ist.

2. Nahrungsmittelhülle gemäß Anspruch 1, **dadurch gekennzeichnet, daß** sie eine Hülle auf Basis von Polyamid oder eine Hülle mit mindestens einer Polyamidschicht und mindestens einer Schicht aus Polyolefin(en) ist.

3. Nahrungsmittelhülle gemäß Anspruch 2, **dadurch gekennzeichnet, daß** weitere Schichten vorhanden sind, bevorzugt Haftschichten, die zwischen Polyamid- und Polyolefinschichten angeordnet sind.

4. Nahrungsmittelhülle gemäß einem oder mehreren der Ansprüche 1 bis 3, **dadurch gekennzeichnet, daß** der *para*-Hydroxy-benzoesäurealkylester bzw. dessen Salz 1 bis 10, bevorzugt 1 bis 6, besonders bevorzugt 2 bis 5, Kohlenstoffatome im Alkylteil enthält.

5. Nahrungsmittelhülle gemäß einem oder mehreren der Ansprüche 1 bis 4, **dadurch gekennzeichnet, daß** der *para*-Hydroxy-benzoesäurealkylester und/oder dessen Salz kombiniert ist mit mindestens einem anderen antimikrobiell wirksamen Mittel.

6. Nahrungsmittelhülle gemäß Anspruch 5, **dadurch gekennzeichnet, daß** das andere antimikrobiell wirksame Mittel ein Mittel ist, das die Wasseraktivität, d.h. den a_{w}-Wert, vermindert.

7. Nahrungsmittelhülle gemäß Anspruch 6, **dadurch gekennzeichnet, daß** das Mittel, das die Wasseraktivität vermindert, Glycerin oder Propandiol ist.

8. Nahrungsmittelhülle gemäß einem oder mehreren der Ansprüche 1 bis 7, **dadurch gekennzeichnet, daß** sie auf ihrer Innenseite mit mindestens einer Komponente imprägniert ist, die die Schälbarkeit verbessert.

9. Nahrungsmittelhülle gemäß Anspruch 8, **dadurch gekennzeichnet, daß** die Komponente, die die Schälbarkeit verbessert, ein Cellulose- oder Stärkederivat, ein Alginate oder Chitosan ist.

10. Verfahren zur Herstellung der Nahrungsmittelhülle gemäß einem oder mehreren der Ansprüche 1 bis 9, **dadurch gekennzeichnet, daß** die Hülle mit einer wäßrigen Lösung vorbefeuchtet wird, in der der Anteil aller antimikrobiellen Mittel zusammen 0,1 und 8 Gew.-%, vorzugsweise 0,2 bis 2 Gew.-%, beträgt.

11. Verfahren gemäß Anspruch 10, **dadurch gekennzeichnet, daß** der *para-*Hydroxybenzoesäurealkylester und/oder dessen Salz in einem Schritt mit dem zur Vorbefeuchtung dienenden Wasser auf die Innen- und/oder Außenseite der Schlauchfolie aufgebracht wird.

12. Verfahren gemäß Anspruch 11, **dadurch gekennzeichnet, daß** die wäßrige Lösung aufgesprüht wird.

13. Verfahren gemäß Anspruch 12, **dadurch gekennzeichnet, daß** die wäßrige Lösung mit Hilfe eines Sprühdorns beim Raffen der Hülle auf deren Innenseite aufgebracht wird.

14. Verfahren gemäß Anspruch 10, **dadurch gekennzeichnet, daß** die wäßrige Lösung mindestens eine Komponente enthält, die die Hülle leicht schälbar macht.

15. Verwendung der Nahrungsmittelhülle gemäß einem oder mehreren der Ansprüche 1 bis 9 als künstliche Wursthülle.

## Claims

1. An antimicrobial, tubular, single- or multilayer polymer-based food casing premoistened so as to be ready-to-fill, wherein an alkyl para-hydroxybenzoate and/or a salt thereof has been applied to the inner and/or outer side of the casing as antimicrobial constituent.

2. The food casing as claimed in claim 1, which is a polyamide-based casing or is a casing with at least one polyamide layer and with at least one layer composed of polyolefin(s).

3. The food casing as claimed in claim 2, wherein other layers are present, preferably adhesion layers arranged between polyamide layers and polyolefin layers.

4. The food casing as claimed in one or more of claims 1 to 3, wherein the alkyl para-hydroxybenzoate or its salt contains from 1 to 10, preferably from 1 to 6, particularly preferably from 2 to 5, carbon atoms in the alkyl moiety.

5. The food casing as claimed in one or more of claims 1 to 4, wherein the alkyl para-hydroxybenzoate and/or its salt has been combined with at least one other antimicrobial agent.

6. The food casing as claimed in claim 5, wherein the other antimicrobial agent is an agent which reduces water activity, i.e. a_{w} value.

7. The food casing as claimed in claim 6, wherein the agent which reduces water activity is glycerol or propanediol.

8. The food casing as claimed in one or more of claims 1 to 7, whose inner side has been impregnated with at least one component which improves peelability.

9. The food casing as claimed in claim 8, wherein the component which improves peelability is a cellulose derivative or starch derivative, an alginate, or chitosan.

10. A process for the production of the food casing as claimed in one or more of claims 1 to 9, which comprises premoistening the casing with an aqueous solution in which the proportion of all of the antimicrobial agents together is from 0.1 to 8% by weight, preferably from 0.2 to 2% by weight.

11. The process as claimed in claim 10, wherein the alkyl para-hydroxybenzoate and/or its salt is applied in one step with the water serving for premoistening to the inner and/or outer side of the tubular film.

12. The process as claimed in claim 11, wherein the aqueous solution is applied by spraying.

13. The process as claimed in claim 12, wherein the aqueous solution is applied with the aid of a spray mandrel to the inner side of the casing, while it is shirred.

14. The process as claimed in claim 10, wherein the aqueous solution comprises at least one component which makes the casing easy to peel.

15. The use of the food casing as claimed in one or more of claims 1 to 9 as synthetic sausage-casing.

## Revendications

1. Enveloppe pour produits alimentaires en matériau synthétique, prête à être remplie, préhumidifiée, apprêtée de manière antimicrobienne, en forme de tuyau, à une ou plusieurs couches, à base de polymère, **caractérisée en ce qu'**on a appliqué sur le côté interne et/ou externe de l'enveloppe, comme constituant actif antimicrobien, un ester alkylique de l'acide para-hydroxy-benzoïque et/ou un sel de celui-ci.

2. Enveloppe pour produits alimentaires selon la revendication 1, **caractérisée en ce qu'**il s'agit d'une enveloppe à base d'un polyamide ou d'une enveloppe présentant au moins une couche en polyamide et au moins une couche en polyoléfine(s).

3. Enveloppe pour produits alimentaires selon la revendication 2, **caractérisée en ce que** d'autres couches sont présentes, de préférence des couches adhésives disposées entre les couches en polyamide et en polyoléfine.

4. Enveloppe pour produits alimentaires selon l'une ou plusieurs des revendications 1 à 3, **caractérisée en ce que** l'ester alkylique de l'acide para-hydroxy-benzoïque ou son sel contient 1 à 10, de préférence 1 à 6, de manière particulièrement préférée 2 à 5, atomes de carbone dans la partie alkyle.

5. Enveloppe pour produits alimentaires selon l'une ou plusieurs des revendications 1 à 4, **caractérisée en ce que** l'ester alkylique de l'acide para-hydroxy-benzoïque et/ou son sel est combiné avec au moins un autre agent actif antimicrobien.

6. Enveloppe pour produits alimentaires selon la revendication 5, **caractérisée en ce que** l'autre agent actif antimicrobien est un agent qui diminue l'activité de l'eau, c'est-à-dire la valeur a_{w}.

7. Enveloppe pour produits alimentaires selon la revendication 6, **caractérisée en ce que** l'agent qui diminue l'activité de l'eau est le glycérol ou le propanediol.

8. Enveloppe pour produits alimentaires selon l'une ou plusieurs des revendications 1 à 7, **caractérisée en ce qu'**elle est imprégnée sur sa face interne d'au moins un composé qui améliore l'aptitude au pelage.

9. Enveloppe pour produits alimentaires selon la revendication 8, **caractérisée en ce que** le composant qui améliore l'aptitude au pelage est un dérivé de cellulose ou d'amidon, un alginate ou du chitosane.

10. Procédé de préparation de l'enveloppe pour produits alimentaires selon l'une ou plusieurs des revendications 1 à 9, **caractérisé en ce que** l'enveloppe est préhumidifiée avec une solution aqueuse dans laquelle la proportion de tous les agents antimicrobiens ensemble est de 0,1 à 8% en poids, de préférence de 0,2 à 2% en poids.

11. Procédé selon la revendication 10, **caractérisé en ce que** l'ester alkylique de l'acide para-hydroxy-benzoïque et/ou son sel est appliqué en une étape avec l'eau servant à la préhumidification sur la face interne et/ou externe de la feuille en tuyau.

12. Procédé selon la revendication 11, **caractérisé en ce que** la solution aqueuse est pulvérisée.

13. Procédé selon la revendication 12, **caractérisé en ce que** la solution aqueuse est appliquée à l'aide d'un mandrin de pulvérisation lors du froncement de l'enveloppe sur sa face interne.

14. Procédé selon la revendication 10, **caractérisé en ce que** la solution aqueuse contient au moins un composant qui rend l'enveloppe facilement pelable.

15. Utilisation de l'enveloppe pour produits alimentaires selon l'une ou plusieurs des revendications 1 à 9 comme enveloppe synthétique pour saucisse.
